# FASCICULE DE BREVET EUROPEEN

(11) **EP 1 392 752 B1**
(45) Date de publication et mention de la délivrance du brevet: **01.06.2005**
(21) Numéro de dépôt: 02761923.8
(22) Date de dépôt: 09.04.2002
(51) Int. Cl.: C08G 63/82

(54) **UTILISATION DE DERIVES DU ZINC COMME CATALYSEURS DE POLYMERISATION D'ESTERS CYCLIQUES**
VERWENDUNG VON ZINKDERIVATEN ALS POLYMERISATIONSKATALYSATOREN VON CYCLISCHEN ESTERN
USE OF ZINC DERIVATIVES AS CYCLIC ESTER POLYMERISATION CATALYSTS

(30) Priorité: 10.04.2001 EP 01400926
(43) Date de publication de la demande: 03.03.2004
(73) Titulaire: Société de Conseils de Recherches et d'Applications Scientifiques ( S.C.R.A.S.), 75016 Paris (FR); CENTRE NATIONAL DE LA RECHERCHE SCIENTIFIQUE (CNRS), 75794 Paris Cedex 16 (FR)
(72) Inventeur: DUMITRESCU, Anca, F-31300 Toulouse (FR); MARTIN-VACA, Blanca, F-31400 Toulouse (FR); GORNITZKA, Heinz, F-31450 Pompertuzat (FR); BOURISSOU, Didier, F-31830 Plaisance du Touch (FR); CAZAUX, Jean-Bernard, F-30390 Aramon (FR); BERTRAND, Guy, F-31400 Toulouse (FR)
(74) Mandataire: Bourgouin, André
(86) Numéro de dépôt international: PCT/FR2002/001220
(87) Numéro de publication internationale: WO 2002/083761

(56) Documents cités:
- EP-A- 0 890 575

## Description

Depuis une vingtaine d'années, les polymères biodégradables ont connu un essor considérable. En particulier, les polyesters tels que les poly-ε-caprolactones, les polylactides et les polyglycolides sont bien adaptés pour de nombreuses applications industrielles (emballage, produits d'usage domestique...), pharmaceutiques (systèmes à libération contrôlée et prolongée) et médicales (éléments de suture, prothèses...). Ils sont généralement préparés par polymérisation par ouverture de cycle à l'aide de dérivés métalliques, notamment de l'aluminium, de l'étain et du zinc (Kuran Prog. Polym. Sci. 1998, 23, 919). Ces polymérisations sont le plus souvent effectuées en milieu hétérogène et conduisent à des distributions de masse assez larges.

Parmi tous les polyesters, les copolymères apparaissent comme des macromolécules "sur mesure". En fonction des applications recherchées, leurs propriétés peuvent en effet être ajustées en jouant sur différents paramètres (longueur de chaîne et distribution de masse mais aussi nature, proportion et enchaînement des monomères et encore nature des extrémités de chaîne). Il y a donc un besoin pour de nouveaux procédés de polymérisation en phase homogène permettant le contrôle de tous ces paramètres.

Dans ce domaine, les travaux des dernières années se sont orientés principalement vers de nouveaux systèmes catalytiques plus ou moins sophistiqués comme les systèmes à ligand porphyrine [Inoue Acc Chem Res (1996) 29, 39], diamido-amine [Bertrand J Am Chem Soc (1996) 118, 5822 ; Organometallics (1998) 17, 3599] ou encore β-diiminate [Coates J Am Chem Soc (1999) 121, 11583 ; Polym. Prep. (1999) 40, 542].

La présente invention propose un procédé de (co)polymérisation d'esters cycliques à la fois simple et efficace, présentant de nombreux avantages, en particulier :
- les catalyseurs de (co)polymérisation utilisés, à base de zinc, sont facilement accessibles et bon marché ; ils sont peu ou pas toxiques. Ce sont des composés bien définis (ils existent sous forme de monomère et/ou dimère) ;
- la (co)polymérisation peut être véritablement effectuée en milieu homogène de sorte que la distribution de masse des (co)polymères obtenus est étroite ; un tel procédé convient très bien à la préparation de copolymères séquencés. L'addition successive de monomères permet notamment d'obtenir des copolymères par blocs. Enfin le procédé permet de contrôler totalement la nature des extrémités des (co)polymères.

La présente invention a donc pour objet l'utilisation de dérivés du zinc de formule générale (1) 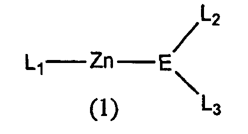 dans laquelle
L₁ représente un groupe de formule -E₁₄(R₁₄)(R'₁₄)(R"₁₄), -E₁₅(R₁₅)(R'₁₅) ou -E₁₆(R₁₆) ;
E est un atome du groupe 15 ;
L₂ et L₃ représentent, indépendamment, un groupe de formule -E₁₄(R₁₄)(R'₁₄)(R"₁₄), -E₁₅(R₁₅)(R'₁₅) ou -E₁₆(R₁₆), ou forment ensemble une chaîne de formule -L'₂-A-L'₃- ;
A représente une chaîne saturée ou insaturée comportant un, deux ou trois éléments du groupe 14, chacun étant optionnellement et indépendamment substitué par l'un des radicaux substitués (par un ou plusieurs substituants identiques ou différents) ou non-substitués suivants : alkyle, cycloalkyle, aryle, dans lesquels ledit substituant est un atome d'halogène, le radical alkyle, aryle, nitro ou cyano ;
L'₂ et L'₃ représentent, indépendamment, un groupe de formule -E₁₄(R₁₄)(R'₁₄)-, -E₁₅(R₁₅) - ou -E₁₆- ;
E₁₄ est un élément du groupe 14 ;
E₁₅ est un élément du groupe 15 ;
E₁₆ est un élément du groupe 16 ;
R₁₄, R'₁₄, R"₁₄, R₁₅, R'₁₅ et R₁₆ représentent, indépendamment, l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, cycloalkyle, aryle, nitro ou cyano ; un radical de formule -E'₁₄RR'R" ;
E'₁₄ est un élément du groupe 14 ;
R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, dans lesquels ledit substituant est un atome d'halogène, le radical alkyle, aryle, nitro ou cyano ;
en tant que catalyseurs de (co)polymérisation d'esters cycliques.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentadiène, cyclohexadiène.

Les radicaux aryles peuvent être de type mono ou polycycliques. Les radicaux aryles monocycliques peuvent être choisis parmi les radicaux phényle optionnellement substitué par un ou plusieurs radicaux alkyle tel que tolyle, xylyle, mésityle, cuményle. Les radicaux aryles polycycliques peuvent être choisis parmi les radicaux naphtyle, anthryle, phénanthryle.

Les composés de formule (1) peuvent se présenter sous forme de monomère et/ou de dimère cyclique :

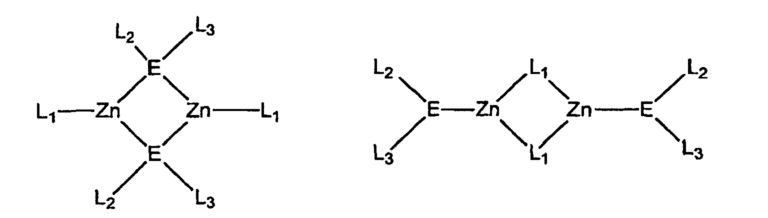

Les composés de formule (1) peuvent comporter une ou plusieurs molécules de solvant [des complexes du zinc avec une ou deux molécules de tétrahydrofuranne ont été isolés et entièrement caractérisés : K. G. Caulton et coll., Inorg. Chem. (1986) 25, 1803 ; D. J. Darensbourg et coll., J. Am. Chem. Soc. (1999) 121, 107] ou alternativement une ou plusieurs phosphines [des complexes du zinc avec une ou deux molécules de phosphine ont été isolés et entièrement caractérisés : D. J. Darensbourg et coll., Inorg. Chem. (1998) 37, 2852 et *ibid*. (2000) 39, 1578]. L'expression solvant représente un hydrocarbure aromatique tel que benzène, toluène ; un dialkyle éther cyclique ou acyclique tels que le diéthyléther, dioxane, tétrahydrofuranne, éthyltertiobutyléther ; un solvant chloré tels que dichlorométhane, chloroforme ; un nitrile aliphatique ou aromatique tels que acétonitrile, benzonitrile ; une cétone aliphatique ou aromatique, cyclique ou acyclique tels que acétone, acétophénone, cyclohexanone ; un dérivé d'acide carboxylique aliphatique ou aromatique, cyclique ou acyclique tels que acétate d'éthyle, diméthylformamide.

L'expression phosphine représente une phosphine tertiaire aromatique et/ou aliphatique telles que triphénylphosphine, diphénylméthylphosphine, diméthylphénylphosphine, tributylphosphine, triméthylphosphine.

L'invention a plus particulièrement pour objet l'utilisation, en tant que catalyseurs de (co)polymérisation d'esters cycliques, des composés de formule générale (1) telle que définie ci-dessus, caractérisée en ce que
E est un atome d'azote ou de phosphore ;
E₁₄ est un atome de carbone ou de silicium ;
E₁₅ est un atome d'azote ou de phosphore ;
E₁₆ est un atome d'oxygène ou de soufre ;
A représente une chaîne saturée ou insaturée comportant un, deux ou trois éléments du groupe 14, chacun étant optionnellement et indépendamment substitué par un radical alkyle ou aryle ;
R₁₄, R'₁₄, R"₁₄, R₁₅, R'₁₅ et R₁₆ représentent, indépendamment, l'atome d'hydrogène, un radical alkyle, un radical aryle ou un radical de formule -E'₁₄RR'R" ;
E'₁₄ est un atome de carbone ou de silicium ;
R, R' et R" représentent, indépendamment, l'atome d'hydrogène ou un radical alkyle,
et de préférence,
E est un atome d'azote ;
E₁₄ est un atome de carbone ;
E₁₅ est un atome d'azote ;
E₁₆ est un atome d'oxygène ou de soufre ;
R₁₄, R'₁₄, R"₁₄, R₁₅ et R'₁₅ représentent indépendamment un radical alkyle ou de formule -E'₁₄RR'R" ;
R₁₆ représente un radical alkyle ou aryle éventuellement substitué par un ou plusieurs substituants choisis parmi les radicaux alkyle et halogène ;
E'₁₄ représente un atome de silicium ;
R, R' et R" représentent, indépendamment, l'atome d'hydrogène ou un radical méthyle, éthyle, propyle ou isopropyle.

L'invention a plus particulièrement pour objet également l'utilisation, en tant que catalyseurs de (co)polymérisation d'esters cycliques, des composés de formule générale (1) telle que définie ci-dessus, caractérisée en ce que
L₁ représente un groupe de formule -E₁₅(R₁₅)(R'₁₅) ;
L₂ et L₃ représentent, indépendamment, un groupe de formule -E₁₄(R₁₄)(R'₁₄)(R"₁₄) ;
et de préférence
E est un atome d'azote ;
E₁₅ est un atome d'azote ;
R₁₄, R'₁₄, R"₁₄, R₁₅ et R'₁₅ représentent indépendamment un radical alkyle ou de formule -E'₁₄RR'R" ;
R, R' et R" représentent, indépendamment, un radical alkyle éventuellement substitué.

De manière très préférentielle, le composé de formule (1) telle que définie ci-dessus, répond à la formule suivante : [(Me₃Si)₂N]₂Zn.

Certains des composés de formule (1) sont des produits connus, c'est-à-dire dont la synthèse et la caractérisation ont été décrites [H. Bürger, W. Sawodny, U. Wannagat, J. Organometal. Chem. (1965) 3, 113 ; K. Hedberg et coll., Inorg Chem. (1984) 23, 1972 ; P. P. Power et coll., Inorg. Chem. (1991) 30, 5013 ; H. Schumann et coll., Z. Anorg. Allg. Chem. (1997) 623, 1881 et *ibid*. (2000) 626, 747]. Par conséquent, les nouveaux composés de formule (1) peuvent être préparés par analogie avec les voies de synthèse déjà décrites.

L'invention concerne l'utilisation des produits de formule (1) telle que définie ci-dessus, en tant que catalyseurs pour la mise en oeuvre de (co)polymérisation d'esters cycliques, c'est à dire de polymérisation ou copolymérisation d'esters cycliques. Lors de la mise en oeuvre de ces (co)polymérisations, les composés selon l'invention jouent le rôle d'initiateur et/ou de régulateur de chaîne.

Les esters cycliques peuvent posséder une taille allant de quatre à huit chaînons. A titre d'exemple d'esters cycliques répondant à la formulation ci-avant, on peut citer l'ε-caprolactone et les esters cycliques polymères de l'acide lactique et/ou glycolique. Des copolymères statistiques ou séquencés peuvent être obtenus selon que les monomères sont introduits ensemble au début de la réaction, ou séquentiellement au cours de la réaction.

L'invention a également pour objet un procédé de préparation de polymères ou de copolymères, séquencés ou aléatoires, qui consiste à mettre en présence un ou plusieurs monomères, un initiateur de chaînes, un catalyseur de polymérisation, et éventuellement un additif, ledit procédé caractérisé en ce que l'initiateur de chaînes et le catalyseur de polymérisation sont représentés par le même composé qui est choisi parmi les composés de formule (1) telle que définie ci-dessus.

L'expression additif représente tout réactif protique tel que l'eau, le sulfure d'hydrogène, l'ammoniac, un alcool aliphatique ou aromatique, un thiol aliphatique ou aromatique, une amine primaire ou secondaire, aliphatique ou aromatique, cyclique ou acyclique. Ce réactif est susceptible d'échanger un des substituants du produit de formule (1), ce qui permet de contrôler la nature d'une des extrémités de chaîne.

La (co)polymérisation peut s'effectuer soit en solution soit en surfusion. Lorsque la (co)polymérisation s'effectue en solution, le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 250° C ; la plage de température comprise entre 20 et 180° C s'avère plus avantageuse. Les durées de réaction sont comprises entre quelques minutes et 300 heures, et de préférence entre 5 minutes et 72 heures.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que les copolymères lactique glycolique sont biodégradables, et sont avantageusement utilisés comme support dans des compositions thérapeutiques à libération prolongée.

L'invention concerne enfin des polymères ou copolymères susceptibles d'être obtenus par la mise en oeuvre d'un procédé tel que décrit ci-dessus.

A moins qu'ils ne soient définis d'une autre manière, tous les termes techniques et scientifiques utilisés dans la présente demande, ont la même signification que celle couramment comprise par un spécialiste ordinaire du domaine auquel appartient l'invention.

Les exemples suivants sont présentés pour illustrer les procédures ci-dessus et ne doivent en aucun cas être considérés comme une limite à la portée de l'invention.

### Exemple 1 : Préparation d'un oligomère à bouts de chaîne contrôlés (amido-alcool) H₂N-(D,L-lactide)ₙ-H

Dans un tube de Schlenk muni d'un barreau aimanté et purgé sous argon, on introduit successivement 0,2 g (0,52 mmol) de [(Me₃Si)₂N]₂Zn et 10 ml de dichlorométhane. A la solution précédente sont ajoutés 0,6 g (4,16 mmol) de D,L-lactide en solution dans 30 ml de dichlorométhane. Le mélange réactionnel est laissé sous agitation à 40° C pendant 20 heures. L'analyse d'un aliquot par RMN du proton montre que la conversion du D,L-lactide est supérieure à 95 %. A la solution précédente sont ajoutés 0,5 ml de méthanol et l'agitation est maintenue pendant 10 min. L'évaporation du solvant suivie d'une extraction à l'acétonitrile permet d'isoler l'oligomère sous forme d'un solide blanc. La nature des bouts de chaîne de cet oligomère est déterminée par spectrométrie de masse (ionisation par électrospray, détection en mode ions positifs, échantillon dissous dans l'acétonitrile avec une trace d'hydroxyde d'ammonium).

### Exemple 2 : Préparation d'un oligomère à bouts de chaîne contrôlés (ester-alcool) i-PrO-(D,L-lactide)ₙ-H

Dans un tube de Schlenk muni d'un barreau aimanté et purgé sous argon, on introduit successivement 0,2 g (0,52 mmol) de [(Me₃Si)₂N]₂Zn, 40 µl (0,52 mmol) d'isopropanol et 10 ml de dichlorométhane. Le mélange réactionnel est laissé sous agitation à température ambiante pendant 10 minutes. Après addition de 0,6 g (4,16 mmol) de D,L-lactide en solution dans 20 ml de dichlorométhane, le milieu réactionnel est laissé sous agitation à température ambiante pendant 60 heures. L'analyse d'un aliquot par RMN du proton montre que la conversion du D,L-lactide est supérieure à 95 %. A la solution précédente sont ajoutés 0,5 ml de méthanol et l'agitation est maintenue pendant 10 min. L'évaporation du solvant suivie d'une extraction à l'acétonitrile permet d'isoler l'oligomère sous forme d'une pâte blanche. La nature des bouts de chaîne de cet oligomère est déterminée par RMN du proton et par spectrométrie de masse (ionisation par électrospray, détection en mode ions positifs, échantillon dissous dans l'acétonitrile avec une trace d'hydroxyde d'ammonium).

### Exemple 3 : Préparation d'un oligomère à bouts de chaîne contrôlés (ester-anhydride) i-PrO-(D,L-lactide)ₙ-COCH₃

Dans un tube de Schlenk muni d'un barreau aimanté et purgé sous argon, on introduit successivement 0,2 g (0,52 mmol) de [(Me₃Si)₂N]₂Zn, 40 µl (0,52 mmol) d'isopropanol et 10 ml de dichlorométhane. Le mélange réactionnel est laissé sous agitation à température ambiante pendant 10 minutes. Après addition de 0,6 g (4,16 mmol) de D,L-lactide en solution dans 20 ml de dichlorométhane, le milieu réactionnel est laissé sous agitation à température ambiante pendant 24 heures. L'analyse d'un aliquot par RMN du proton montre que la conversion du D,L-lactide est supérieure à 95 %. A la solution précédente sont ajoutés 0,2 ml d'anhydride acétique et l'agitation est maintenue pendant 10 min. L'évaporation du solvant suivie d'une extraction à l'acétonitrile permet d'isoler l'oligomère sous forme d'une pâte blanche. La nature des bouts de chaîne de cet oligomère est déterminée par RMN du proton et par spectrométrie de masse (ionisation par électrospray, détection en mode ions positifs, échantillon dissous dans l'acétonitrile avec une trace d'hydroxyde d'ammonium).

### Exemple 4 : Préparation d'un copolymère (D,L-lactide / glycolide) aléatoire de masse 15 000 ayant une composition lactide / glycolide proche de 50/50

Dans un tube de Schlenk muni d'un barreau aimanté et purgé sous argon, on introduit successivement 3,92 g (27,3 mmol) de D,L-lactide, 3,11 g (27,3 mmol) de glycolide, et 12 ml de mésitylène puis, à 180° C, une solution de 0,07 g (0,18 mmol) de [(Me₃Si)₂N]₂Zn dans 1 ml de mésitylène. Le mélange réactionnel est laissé sous agitation à 180° C pendant 2 heures. Une analyse par RMN du proton permet de vérifier que la conversion est de 94 % pour le lactide et de 100 % pour le glycolide. Le rapport des intégrales des signaux correspondant à la partie polylactide (5,20 ppm) et polyglycolide (4,85 ppm) permet d'évaluer la composition du copolymère à 50 % de lactide et 50 % de glycolide. Selon une analyse par GPC, à l'aide d'un étalonnage réalisé à partir de standards de PS de masses 761 à 400 000, ce copolymère est un mélange de macromolécules (Mw/Mn = 1,98) de masses peu élevées (Mw = 15 000 Dalton).

### Exemple 5 : Préparation d'un copolymère (D,L-lactide / glycolide) aléatoire de masse 35 000 ayant une composition lactide / glycolide proche de 50/50

Dans un tube de Schlenk muni d'un barreau aimanté et purgé sous argon, on introduit successivement 7,84 g (54,6 mmol) de D,L-lactide, 6,22 g (54,6 mmol) de glycolide et 12 ml de mesitylène puis, à 180° C, une solution de 0,07 g (0,18 mmol) de [(Me₃Si)₂N]₂Zn dans 1 ml de mésitylène. Le mélange réactionnel est laissé sous agitation à 180° C pendant 2 heures. Une analyse par RMN du proton permet de vérifier que la conversion est de 78 % pour le lactide et de 100 % pour le glycolide. Le rapport des intégrales des signaux correspondant à la partie polylactide (5,20 ppm) et polyglycolide (4,85 ppm) permet d'évaluer la composition du copolymère à 47 % de lactide et 53 % de glycolide. Selon une analyse par GPC, à l'aide d'un étalonnage réalisé à partir de standards de PS de masses 761 à 400 000, ce copolymère est un mélange de macromolécules (Mw/Mn = 1,56) de masses assez élevées (Mw = 35 000 Dalton).

### Exemple 6 : Préparation d'un copolymère (D,L-lactide / glycolide) aléatoire de masse 45 000 ayant une composition lactide / glycolide proche de 50/50

Dans un tube de Schlenk muni d'un barreau aimanté et purgé sous argon, on introduit successivement 3,92 g (27,2 mmol) de D,L-lactide, 3,11 g (27,2 mmol) de glycolide et 13 ml de mésitylène. Puis, à 180° C, on additionne une solution de 70 mg (0,18 mmol) de [(Me₃Si)₂N]₂Zn et 14 µl (0,18 mmol) d'isopropanol dans 2 ml de mésitylène. Le mélange réactionnel est laissé sous agitation à 180° C pendant 2 heures. Une analyse par RMN du proton permet de vérifier que la conversion est de 80 % pour le lactide et de 100 % pour le glycolide. Le rapport des intégrales des signaux correspondant à la partie polylactide (5,20 ppm) et polyglycolide (4,85 ppm) permet d'évaluer la composition du copolymère à 44 % de lactide et 56 % de glycolide. Selon une analyse par GPC, à l'aide d'un étalonnage réalisé à partir de standards de PS de masses 761 à 400 000, ce copolymère est un mélange de macromolécules (Mw/Mn = 1,65) de masses assez élevées (Mw = 45 000 Dalton).

### Exemple 7 : Préparation d'un copolymère (D,L-lactide / glycolide) séquencé

Dans un tube de Schlenk muni d'un barreau aimanté et purgé sous argon, on introduit successivement 4,7 g (33,5 mmol) de D,L-lactide, et 15 ml de mésitylène. Puis, à 180° C, on additionne une solution de 86 mg (0,22 mmol) de [(Me₃Si)₂N]₂Zn et 17 µl (0,22 mmol) d'isopropanol dans 3 ml de mésitylène. Le mélange réactionnel est laissé sous agitation à 180° C pendant 2 heures. Une analyse par RMN du proton permet de vérifier que la conversion du monomère est totale. A la solution précédente maintenue sous agitation à 180° C sont ajoutés 0,5 g (4,5 mmol) de glycolide. Le mélange réactionnel est laissé sous agitation à 180° C pendant 1 heure. L'analyse d'un aliquot par RMN du proton montre que la conversion du lactide et du glycolide est totale et qu'un copolymère est formé. Le rapport des intégrales des signaux correspondant à la partie polylactide (5,20 ppm) et polyglycolide (4,85 ppm) est de 9/1. L'analyse par GPC indique que ce copolymère est un mélange de macromolécules de faible indice de polydispersité (Mw = 20 400 Dalton, Mw/Mn = 1,41).

## Revendications

1. Utilisation de dérivés du zinc de formule générale (1) 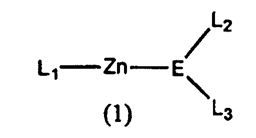 dans laquelle
L₁ représente un groupe de formule -E₁₄(R₁₄)(R'₁₄)(R"₁₄), -E₁₅(R₁₅)(R'₁₅) ou -E₁₆(R₁₆) ;
E est un atome du groupe 15 ;
L₂ et L₃ représentent, indépendamment, un groupe de formule -E₁₄(R₁₄)(R'₁₄)(R"₁₄), -E₁₅(R₁₅)(R'₁₅) ou -E₁₆(R₁₆), ou forment ensemble une chaîne de formule -L'₂-A-L'₃- ;
A représente une chaîne saturée ou insaturée comportant un, deux ou trois éléments du groupe 14, chacun étant optionnellement et indépendamment substitué par l'un des radicaux substitués par un ou plusieurs substituants identiques ou différents ou non-substitués suivants : alkyle, cycloalkyle, aryle, dans lesquels ledit substituant est un atome d'halogène, le radical alkyle, aryle, nitro ou cyano ;
L'₂ et L'₃ représentent, indépendamment, un groupe de formule -E₁₄(R₁₄)(R'₁₄)-, -E₁₅(R₁₅)- ou -E₁₆- ;
E₁₄ est un élément du groupe 14 ;
E₁₅ est un élément du groupe 15 ;
E₁₆ est un élément du groupe 16 ;
R₁₄, R'₁₄, R"₁₄, R₁₅, R'₁₅ et R₁₆ représentent, indépendamment, l'atome d'hydrogène ; l'un des radicaux substitués ou non-substitués suivants : alkyle, cycloalkyle ou aryle, dans lesquels ledit substituant est un atome d'halogène, le radical alkyle, cycloalkyle, aryle, nitro ou cyano ; un radical de formule -E'₁₄RR'R" ;
E'₁₄ est un élément du groupe 14 ;
R, R' et R" représentent, indépendamment, l'atome d'hydrogène ou l'un des radicaux substitués par un ou plusieurs substituants identiques ou différents ou non-substitués suivants : alkyle, cycloalkyle, aryle, dans lesquels ledit substituant est un atome d'halogène, le radical alkyle, aryle, nitro ou cyano ;
en tant que catalyseurs de (co)polymérisation d'esters cycliques.

2. Utilisation, selon la revendication 1, d'un composé de formule (1) **caractérisée en ce que**
E est un atome d'azote ou de phosphore ;
E₁₄ est un atome de carbone ou de silicium ;
E₁₅ est un atome d'azote ou de phosphore ;
E₁₆ est un atome d'oxygène ou de soufre ;
A représente une chaîne saturée ou insaturée comportant un, deux ou trois éléments du groupe 14, chacun étant optionnellement et indépendamment substitué par un radical alkyle ou aryle ;
R₁₄, R'₁₄, R"₁₄, R₁₅, R'₁₅ et R₁₆ représentent, indépendamment, l'atome d'hydrogène, un radical alkyle, un radical aryle ou un radical de formule -E'₁₄RR'R" ;
E'₁₄ est un atome de carbone ou de silicium ;
R, R' et R" représentent, indépendamment, l'atome d'hydrogène ou un radical alkyle.

3. Utilisation, selon la revendication 2, d'un composé de formule (1) **caractérisée en ce que**
E est un atome d'azote ;
E₁₄ est un atome de carbone ;
E₁₅ est un atome d'azote ;
E₁₆ est un atome d'oxygène ou de soufre ;
R₁₄, R'₁₄, R"₁₄, R₁₅ et R'₁₅ représentent indépendamment un radical alkyle ou de formule -E'₁₄RR'R" ;
R₁₆ représente un radical alkyle ou aryle éventuellement substitué par un ou plusieurs substituants choisis parmi les radicaux alkyle et halogène ;
E'₁₄ représente un atome de silicium ;
R, R' et R" représentent, indépendamment, l'atome d'hydrogène ou un radical méthyle, éthyle, propyle ou isopropyle.

4. Utilisation, selon la revendication 1, d'un composé de formule (1) **caractérisée en ce que**
L₁ représente un groupe de formule -E₁₅(R₁₅)(R'₁₅) ;
L₂ et L₃ représentent, indépendamment, un groupe de formule -E₁₄(R₁₄)(R'₁₄)(R"₁₄) ;

5. Utilisation, selon la revendication 4, d'un composé de formule (1) **caractérisée en ce que**
E est un atome d'azote ;
E₁₅ est un atome d'azote ;
R₁₄, R'₁₄, R"₁₄, R₁₅ et R'₁₅ représentent indépendamment un radical alkyle ou de formule -E'₁₄RR'R" ;
R, R' et R" représentent, indépendamment, un radical alkyle éventuellement substitué.

6. Utilisation, selon l'une des revendications 2 à 5, du composé de formule (1) **caractérisé en ce qu'**il répond à la formule [(Me₃Si)₂N]₂Zn.

7. Utilisation selon l'une des revendications 1 à 6, pour la polymérisation ou copolymérisation d'esters cycliques, notamment les esters cycliques polymères de l'acide lactique et/ou glycolique.

8. Procédé de préparation de copolymères, séquencés ou aléatoires, ou de polymères, et qui consiste à mettre en présence un ou plusieurs monomères choisis parmi les esters cycliques, un catalyseur de polymérisation et, éventuellement, un additif voire un solvant de polymérisation, à une température comprise entre la température ambiante et 250° C, pendant une durée comprise entre quelques minutes et 300 heures, ledit procédé **caractérisé en ce que** l'initiateur de chaînes et le catalyseur de polymérisation sont représentés par le même composé de formule générale (1) telle que définie à l'une des revendications 1 à 6.

9. Procédé selon la revendication 8, **caractérisé en ce que** le monomère est choisi parmi les esters cycliques polymères de l'acide lactique et / ou glycolique.

## Patentansprüche

1. Verwendung von Zinkderivaten der allgemeinen Formel (1) 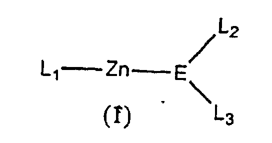 in der
L₁ eine Gruppe der Formel -E₁₄(R₁₄)(R'₁₄)(R"₁₄), -E₁₅(R₁₅)(R'₁₅) oder -E₁₆(R₁₆) darstellt;
L₂ und L₃ unabhängig voneinander eine Gruppe der Formel -E₁₄(R₁₄)(R'₁₄)(R"₁₄), -E₁₅(R₁₅)(R'₁₅) oder -E₁₆(R₁₆) darstellen oder zusammen eine Kette der Formel -L'₂-A-L'₃- bilden;
A eine gesättigte oder ungesättigte Kette mit einem, zwei oder drei Elementen der Gruppe 14 darstellt, wobei jedes wahlweise und unabhängig voneinander durch einen der folgenden Reste substituiert ist, die durch einen oder mehrere gleiche oder verschiedene Substituenten substituiert sind oder nicht substituiert sind: Alkyl, Cycloalkyl, Aryl, bei denen dieser Substituent ein Halogenatom, ein Alkyl-, Aryl-, Nitro- oder Cyanrest ist;
L'₂ und L'₃ unabhängig voneinander eine Gruppe der Formel -E₁₄(R₁₄) (R'₁₄) -, -E₁₅(R₁₅)- oder -E₁₆- darstellen;
E₁₄ ein Element der Gruppe 14 ist;
E₁₅ ein Element der Gruppe 15 ist;
E₁₆ ein Element der Gruppe 16 ist;
R₁₄, R'₁₄, R"₁₄, R₁₅, R'₁₅ und R₁₆ unabhängig voneinander darstellen: ein Wasserstoffatom; einen der folgenden substituierten oder nicht substituierten Reste: Alkyl, Cycloalkyl oder Aryl, bei denen dieser Substituent ein Halogenatom, ein Alkyl-, Cycloalkyl-, Aryl-, Nitro- oder Cyanrest ist; einen Rest der Formel -E'₁₄RR'R";
E'₁₄ ein Element der Gruppe 14 ist;
R, R' und R" unabhängig voneinander ein Wasserstoffatom oder einen der folgenden Reste darstellen, die durch einen oder mehrere gleiche oder verschiedene Substituenten substituiert sind oder nicht substituiert sind: Alkyl, Cycloalkyl, Aryl, bei denen dieser Substituent ein Halogenatom, ein Alkyl-, Aryl-, Nitro- oder Cyanrest ist;
als Katalysatoren für die (Co)Polymerisation von cyclischen Estern.

2. Verwendung nach Anspruch 1 einer Verbindung der Formel (1), **dadurch gekennzeichnet, dass**
E ein Stickstoff- oder Phosphoratom ist;
E₁₄ ein Kohlenstoff- oder Siliciumatom ist;
E₁₅ ein Stickstoff- oder Phosphoratom ist;
E₁₆ ein Sauerstoff- oder Schwefelatom ist;
A eine gesättigte oder ungesättigte Kette mit einem, zwei oder drei Elementen der Gruppe 14 darstellt, wobei jedes wahlweise und voneinander unabhängig durch einen Alkyloder Arylrest substituiert ist;
R₁₄, R'₁₄, R"₁₄, R₁₅, R'₁₅ und R₁₆ unabhängig voneinander ein Wasserstoffatom, einen Alkylrest, einen Arylrest oder einen Rest der Formel -E'₁₄RR'R" darstellen;
E'₁₄ ein Kohlenstoff- oder Siliciumatom ist;
R, R' und R" unabhängig voneinander ein Wasserstoffatom oder einen Alkylrest darstellen.

3. Verwendung nach Anspruch 2 einer Verbindung der Formel (1), **dadurch gekennzeichnet, dass**
E ein Stickstoffatom ist;
E₁₄ ein Kohlenstoffatom ist;
E₁₅ ein Stickstoffatom ist;
E₁₆ ein Sauerstoff- oder Schwefelatom ist;
R₁₄, R'₁₄, R"₁₄, R₁₅ und R'₁₅ unabhängig voneinander einen Alkylrest oder einen Rest der Formel -E'₁₄RR'R" darstellen;
R₁₆ einen Akyl- oder Arylrest darstellt, der ggf. durch einen oder mehrere Substituenten substituiert ist, die aus den Resten Alkyl und Halogen ausgewählt sind;
E'₁₄ ein Siliciumatom darstellt;
R, R' und R" unabhängig voneinander ein Wasserstoffatom oder einen Methyl-, Ethyl-, Propyl- oder Isopropylrest darstellen.

4. Verwendung nach Anspruch 1 einer Verbindung der Formel (1), **dadurch gekennzeichnet, dass**
L₁ eine Gruppe der Formel -E₁₅(R₁₅)(R'₁₅) darstellt;
L₂ und L₃ unabhängig voneinander eine Gruppe der Formel -E₁₄(R₁₄) (R'₁₄) (R"₁₄) darstellen.

5. Verwendung nach Anspruch 4 einer Verbindung der Formel (1), **dadurch gekennzeichnet, dass**
E ein Stickstoffatom ist;
E₁₅ ein Stickstoffatom ist;
R₁₄, R'₁₄, R"₁₄, R₁₅ und R'₁₅ unabhängig voneinander einen Alkylrest oder einen Rest der Formel -E'₁₄RR'R" darstellen;
R, R' und R" unabhängig voneinander einen ggf. substituierten Alkylrest darstellen.

6. Verwendung nach einem der Ansprüche 2 bis 5 der Verbindung der Formel (1), **dadurch gekennzeichnet, dass** sie der Formel [(Me₃Si)₂N]₂Zn entspricht.

7. Verwendung nach einem der Ansprüche 1 bis 6 für die Polymerisation oder Copolymerisation von cyclischen Estern, insbesondere den polymeren cyclischen Estern der Milch- und/oder Glycolsäure.

8. Verfahren zur Herstellung von Blockcopolymeren oder statistischen Copolymeren oder von Polymeren, das darin besteht, dass ein oder mehrere Monomere, die aus den cyclischen Estern ausgewählt sind, ein Polymerisationskatalysator und ggf. ein Additiv oder auch ein Polymerisationslösungsmittel bei einer Temperatur zwischen Raumtemperatur und 250°C während einer Zeit von einigen Minuten bis 300 Stunden zusammengebracht werden, wobei dieses Verfahren **dadurch gekennzeichnet ist, dass** der Ketteninitiator und der Polymerisationskatalysator durch dieselbe Verbindung der allgemeinen Formel (1), wie sie in einem der Ansprüche 1 bis 6 definiert wird, bereitgestellt werden.

9. Verfahren nach Anspruch 8, **dadurch gekennzeichnet, dass** das Monomer aus den polymeren cyclischen Estern der Milch- und/oder Glycolsäure ausgewählt ist.

## Claims

1. Use of zinc derivatives of general formula (1) 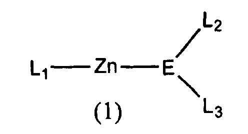 in which
L₁ represents a group of formula -E₁₄(R₁₄)(R'₁₄)(R"₁₄), -E₁₅(R₁₅)(R'₁₅) or -E₁₆(R₁₆) ;
E is an atom of group 15 ;
L₂ and L₃ represent, independently, a group of formula -E₁₄(R₁₄)(R'₁₄)(R"₁₄), -E₁₅(R₁₅)(R'₁₅) or -E₁₆(R₁₆), or form together a chain of formula -L'₂-A-L'₃- ;
A represents a saturated or unsaturated chain comprising one, two or three elements of group 14, each being optionally and independently substituted by one of the following substituted by one or more identical or different substituents or non-substituted radicals : alkyl, cycloalkyl, aryl, in which said substituent is a halogen atom, the alkyl, aryl, nitro or cyano radical ;
L'₂ and L'₃ represent, independently, a group of formula -E₁₄(R₁₄)(R'₁₄)-, -E₁₅(R₁₅)- or -E₁₆- ;
E₁₄ is an element of group 14 ;
E₁₅ is an element of group 15 ;
E₁₆ is an element of group 16 ;
R₁₄, R'₁₄, R"₁₄, R₁₅, R'₁₅ and R₁₆ represent, independently, the hydrogen atom ; one of the following substituted or non-substituted radicals : alkyl, cycloalkyl or aryl, in which said substituent is a halogen atom, the alkyl, cycloalkyl, aryl, nitro or cyano radical; a radical of formula -E'₁₄RR'R" ;
E'₁₄ is an element of group 14 ;
R, R' and R" represent, independently, the hydrogen atom or one of the following substituted by one or more identical or different substituents or non-substituted radicals : alkyl, cycloalkyl, aryl, in which said substituent is a halogen atom, the alkyl, aryl, nitro or cyano radical ;
as cyclic ester (co)polymerization catalysts.

2. Use, according to claim 1, of a compound of formula (1) **characterized in that**
E is a nitrogen or phosphorus atom ;
E₁₄ is a carbon or silicon atom ;
E₁₅ is a nitrogen or phosphorus atom ;
E₁₆ is an oxygen or sulphur atom ;
A represents a saturated or unsaturated chain comprising one, two or three elements of group 14, each being optionally and independently substituted by an alkyl or aryl radical ;
R₁₄, R'₁₄, R"₁₄, R₁₅, R'₁₅ and R₁₆ represent, independently, the hydrogen atom, an alkyl radical, an aryl radical or a radical of formula -E'₁₄RR'R" ;
E'₁₄ is a carbon or silicon atom ;
R, R' and R" represent, independently, the hydrogen atom or an alkyl radical.

3. Use, according to claim 2, of a compound of formula (1) **characterized in that**
E is a nitrogen atom ;
E₁₄ is a carbon atom ;
E₁₅ is a nitrogen atom ;
E₁₆ is an oxygen or sulphur atom ;
R₁₄, R'₁₄, R"₁₄, R₁₅ and R'₁₅ represent independently an alkyl radical or radical of formula -E'₁₄RR'R" ;
R₁₆ represents an alkyl or aryl radical optionally substituted by one or more substituents chosen from the alkyl radicals and halogen ;
E'₁₄ represents a silicon atom ;
R, R' and R" represent, independently, the hydrogen atom or a methyl, ethyl, propyl or isopropyl radical.

4. Use, according to claim 1, of a compound of formula (1) **characterized in that**
L₁ represents a group of formula -E₁₅(R₁₅)(R'₁₅) ;
L₂ and L₃ represent, independently, a group of formula -E₁₄(R₁₄)(R'₁₄)(R"₁₄).

5. Use, according to claim 4, of a compound of formula (1) **characterized in that**
E is a nitrogen atom ;
E₁₅ is a nitrogen atom ;
R₁₄, R'₁₄, R"₁₄, R₁₅ and R'₁₅ represent, independently, an alkyl radical or radical of formula -E'₁₄RR'R" ;
R, R' and R" represent, independently, an optionally substituted alkyl radical.

6. Use, according to one of claims 2 to 5, of the compound of formula (1) **characterized in that** it corresponds to the formula [(Me₃Si)₂N]₂Zn.

7. Use according to one of claims 1 to 6, for the polymerization or copolymerization of cyclic esters, in particular the cyclic ester polymers of lactic and/or glycolic acid.

8. Process for preparing block or random copolymers, or polymers, which consists of bringing together one or more monomers chosen from cyclic esters, a polymerization catalyst and, optionally, an additive, even a polymerization solvent, at a temperature comprised between ambient temperature and 250° C, for a period comprised between a few minutes and 300 hours, said process **characterized in that** the chain initiator and the polymerization catalyst are represented by the same compound of general formula (1) as defined above as defined in one of claims 1 to 6.

9. Process according to claim 8, **characterized in that** the monomer is chosen from the cyclic esters polymers of lactic and / or glycolic acid.
